# EUROPEAN PATENT SPECIFICATION

(11) **EP 4 233 016 B1**
(45) Date of publication and mention of the grant of the patent: **28.10.2026**
(21) Application number: 20835843.2
(22) Date of filing: 22.12.2020
(51) Int. Cl.: G06V 10/46

(54) **APPARATUS AND METHOD FOR AUTOMATIC KEYPOINT AND DESCRIPTION EXTRACTION**
VORRICHTUNG UND VERFAHREN ZUR AUTOMATISCHEN SCHLÜSSELPUNKT- UND BESCHREIBUNGSEXTRAKTION
APPAREIL ET PROCÉDÉ D'EXTRACTION AUTOMATIQUE DE POINTS CLÉS ET DE DESCRIPTION

(43) Date of publication of application: 30.08.2023
(73) Proprietor: Huawei Technologies Co., Ltd., Shenzhen, Guangdong 518129 (CN)
(72) Inventor: URFALIOGLU, Onay, 80992 Munich (DE); DA COSTA SIQUEIRA, Henrique, 80992 Munich (DE)
(74) Representative: Gill Jennings & Every LLP
(86) International application number: PCT/EP2020/087724
(87) International publication number: WO 2022/135708

(56) References cited:
- US-A1- 2017 124 711
- PENG GAO ET AL: "Siamese Attentional Keypoint Network for High Performance Visual Tracking", ARXIV.ORG, CORNELL UNIVERSITY LIBRARY, 201 OLIN LIBRARY CORNELL UNIVERSITY ITHACA, NY 14853, 23 April 2019 (2019-04-23), XP081567097, DOI: 10.1016/J.KNOSYS.2019.105448
- SHAN MO: "Weakly supervised keypoint detection Autonomy of Single UAV View project Weakly supervised keypoint detection", 30 April 2019 (2019-04-30), XP055837873, Retrieved from the Internet <URL:https://www.researchgate.net/profile/Mo-Shan/publication/332511547_Weakly_supervised_keypoint_detection/links/5cb8998da6fdcc1d499ee445/Weakly-supervised-keypoint-detection.pdf> [retrieved on 20210906]
- JOST TOBIAS SPRINGENBERG ET AL: "Striving for Simplicity: The All Convolutional Net", CORR (ARXIV), vol. abs/1412.6806v3, 13 April 2015 (2015-04-13), pages 1 - 14, XP055293816
- TING CHEN ET AL: "A Simple Framework for Contrastive Learning of Visual Representations", ARXIV.ORG, CORNELL UNIVERSITY LIBRARY, 201 OLIN LIBRARY CORNELL UNIVERSITY ITHACA, NY 14853, 13 February 2020 (2020-02-13), XP081632474

## Description

### TECHNICAL FIELD

The disclosure relates generally to image processing techniques. Moreover, the disclosure relates to an apparatus and a method for (namely, a method of) performing automatic keypoint and description extraction from image data that is representative of a plurality of images. Moreover, the disclosure relates to a self-driving vehicle including the apparatus and a method for (namely, a method of) operating the self-driving vehicle including the apparatus for enabling the self-driving vehicle to navigate in a spatial region.

### BACKGROUND

In image processing, keypoint detection and description extraction are essential components for several geometric computer tasks such as robust pose estimation and Simultaneous Localization And Mapping (SLAM). The keypoint detection is used to find corresponding points between two or more images of a same scene or an object. The keypoint detection has demonstrated considerable success in many computer vision and pattern recognition applications such as object recognition, motion tracking, wide-baseline stereo, texture recognition, image retrieval, robot navigation, video data mining, recognizing of building panorama, stereo correspondence, recovering camera motion, and 3D reconstruction. The keypoint detection determines a stable keypoint that is to be matched with positions and scales of the two or more images of the same scene or the object. The stable keypoint is detected using a position and the corresponding scale, and at the same time that the appropriate neighborhood is used in computing descriptors. The description of a keypoint involves building a unique descriptor for each keypoint by describing the keypoint and neighboring regions of the keypoint, that is creating a description of the keypoint ideally. The description has to be distinctive and invariant under various transformations due to viewpoint change, rotation, scaling, illumination change, and so forth.

In a known approach, the keypoint detection and extraction rely on hand-crafted features where scale and rotation are estimated to compute the description based on local features from neighboring pixels. In another known approach, the keypoint detection and extraction are relied on learning local features from labelled data or pseudo ground truths (i.e. labels are generated from approaches' predictions). This known approach relies on a strong prior basis where a given keypoint is conditioned to be similar to the synthetic keypoint and a generalization is limited to corner-like features learned from the generated pseudo ground truth. In another known approach, negative samples are generated from a different image and the positive samples are the result of the application of data augmentation methods to the same image. The positive samples extracted from the image do not explicitly take into consideration the spatial information of the image. This known approach is not able to identify keypoints with the same visual content in two similar images.

Peng Gao et al., "Siamese Attentional Keypoint Network for High Performance Visual Tracking", arxiv: 1904.10128, 23 April 2019 is relevant prior art, disclosing an end-to-end visual tracker that combines a lightweight Siamese hourglass network, cross-attentional modules, and an anchor-free three-branch keypoint detection module to achieve highly accurate, real-time tracking performance even under severe occlusion and background clutter.

In the aforesaid known approaches, local features are ambiguous and hard for non-experts to interpret the keypoint and description. The hand-crafted descriptors are not capable of capturing a large variety of input patterns from natural images. Existing learnable descriptors do not generalize well to distributions different from the training distribution.

The known approaches require large labelled datasets and drop in performance under adverse conditions such as illumination changes and different viewpoints.

Therefore, there arises a need to address the aforementioned technical drawbacks in existing systems or technologies in the automatic keypoint and description extraction.

### SUMMARY

It is an object of the disclosure to provide an apparatus for performing automatic keypoint and description that is adapted for different data distributions and becomes robust to adverse conditions such as illumination changes and different viewpoints. Moreover, it is an object of the disclosure to provide an improved method for (namely, a method of) using the apparatus for performing automatic keypoint and description extraction from image data that is representative of a plurality of images.

This object is achieved by the features of the independent claims. Further implementation forms are apparent from the dependent claims, the description, and the figures.

The disclosure provides an apparatus and a method for performing automatic keypoint and description extraction from image data that is representative of a plurality of images.

According to a first aspect, there is provided an apparatus for performing automatic keypoint and description extraction from image data that is representative of a plurality of images. The image data is input to the apparatus. The apparatus includes a data processing arrangement coupled to a data memory arrangement. The data processing arrangement is configured to execute one or more neural network algorithms. The apparatus includes a correspondence network arrangement and a feature description arrangement. The correspondence network arrangement is implemented as an algorithm that is executed by the data processing arrangement. The correspondence network arrangement is configured to process the image data to remove regions of the plurality of images that have information content below a given threshold, and to select at least one region in each of the plurality of images that represent a mutually common feature, to generate one or more output feature vectors h representative of features present in the image data. The feature description arrangement is implemented as an algorithm that is executed by the data processing arrangement. The feature description arrangement is configured to receive the one or more output vectors h for the plurality of images, and to generate one or more output vectors ***z*** that are representative of one or more keypoints present in each of the plurality of images of the image data.

The apparatus is fully automated for keypoint and description extraction. The apparatus performs the automatic keypoint and description extraction without any labelled real-time image data. The apparatus is configured to learn any type of essential visual features and essential semantic information from the image data. The apparatus may include visual embeddings that are used to solve computer vision problems such as place recognition and classification tasks. The apparatus is continuously trained for learning to (i) adapt different data distributions associated with different environment and weather conditions, and (ii) become robust to adverse conditions. The apparatus is invariant to changes in input space.

The one or more algorithms use a keypoint detection algorithm that utilizes guided back-propagation from output neurons in a neural network to detect one or more keypoints in the image data by generating output gradient tensors ***g***, and to use hysteresis thresholding applied to the detected one or more keypoints to filter out from the output gradient tensors ***g*** keypoints having a lower relevance. Optionally, the keypoint detection algorithm is configured by detecting output values from highest-activated neurons stimulated by the keypoint detection algorithm that describes the most informative features present in the image data.

The keypoint detection algorithm detects the one or more keypoints using a single input image by guided back-propagating the values of highest activated output neurons that describe most informative visual features of the input image. The apparatus utilizes post-processing methods such as hysteresis thresholding and non-maximum suppression, to detect the one or more keypoints, to improve robustness, accuracy, reliability, and repeatability measure of the one or more keypoints.

Optionally, the apparatus is trained using contrastive learning based on a sampling algorithm tailored for keypoint and description extraction to detect automatically visual similarities and differences between images. The sampling algorithm is configured to process a combination of positive and negative versions of the at least one image of the input data that preserves spatial relationships between the images. Positive samples are described as partially overlapping regions from the image and negative samples as non-overlapping regions from one or other images.

The correspondence network arrangement and the feature description arrangement are respectively implemented as an encoder network that is configured to receive the image data and to generate the one or more output feature vectors ***h***, and a projection head network that is configured to receive the one or more output feature vectors ***h*** and to generate therefrom the one or more output vectors ***z*** that are representative of the one or more keypoints present in the image data.

The apparatus is configured to generate a set of the one or more output vectors ***z*** for each image. The apparatus is configured to compute an argument parameter from a multiplication of the sets of the one or more output vectors ***z***. The argument parameter is indicative of whether or not a same given feature is present in the plurality of images.

The apparatus is configured to compute a given keypoint ***k*** by extracting from the image data a local patch centre at the keypoint ***k*.** The local patch is re-scaled such that a cosine similarity of the one or more output vectors ***z*** of local patches of the plurality of images is used to determine whether or not the local patches represent a same feature for correspondence detection purposes.

Optionally, the apparatus is configured to compute a given keypoint ***k*** by extracting from the image data a local patch centre at the keypoint ***k*.** The apparatus is configured to use an additional neural network algorithm that is trained via contrastive learning from a combination of positive and negative versions of the at least one image of the input data that preserves spatial relationships between the images. The additional neural network algorithm is configured to process extracted local patches surrounding the local patch centre at the keypoint ***k*** to learn visual similarities and differences from the input data; a cosine similarity of the one or more output vectors ***z*** of local patches of the plurality of images from one or more neural networks is used to determine whether or not the local patches represent a same feature for correspondence detection purposes.

According to a second aspect, there is provided a method for using an apparatus for performing automatic keypoint and description extraction from image data that is representative of a plurality of images. The image data is input to the apparatus. The apparatus includes a data processing arrangement coupled to a data memory arrangement. The data processing arrangement is configured to execute one or more neural network algorithms. The method includes configuring the apparatus to use a correspondence network arrangement that is implemented as an algorithm that is executed by the data processing arrangement. The correspondence network arrangement is configured to process the image data to remove regions of the plurality of images that have information content below a given threshold, and to select at least one region in each of the plurality of images that represent a mutually common feature, to generate one or more output feature vectors ***h*** representative of features present in the image data. The method includes configuring the apparatus to use a feature description arrangement that is implemented as an algorithm that is executed by the data processing arrangement. The feature description arrangement is configured to receive the one or more output vectors ***h*** for the plurality of images, and to generate one or more output vectors ***z*** that are representative of one or more keypoints present in each of the plurality of images of the image data.

The method may include a Siamese Convolutional Network that is trained using contrastive learning to automatically identify visual similarities and differences between the plurality of images. The method is fully automated for keypoint and description extraction. The method performs the automatic keypoint and description extraction without any labelled real-time image data. The method enables the apparatus to adapt learning of any type of essential visual features and essential semantic information from the image data. The method may employ visual embeddings that are used to solve computer vision problems such as place recognition and classification tasks. The method enables the apparatus to continuously train for learning to (i) adapt different data distributions associated with different environments and weather conditions, and (ii) become robust to adverse conditions. The method is invariant to changes in input space.

The method includes arranging for the one or more algorithms to use a keypoint detection algorithm that utilizes guided back-propagation from output neurons in a neural network to detect one or more keypoints in the image data by generating output gradient tensors ***g***, and to use hysteresis thresholding applied to the detected one or more keypoints to filter out from the output gradient tensors ***g*** keypoints having a lower relevance.

The method includes post-processing methods such as hysteresis thresholding and non-maximum suppression, to detect the keypoint, to improve robustness, accuracy, reliability, and repeatability measure.

Optionally, the method includes configuring the keypoint detection algorithm by detecting output values from highest-activated neurons stimulated by the keypoint detection algorithm that describes most informative features present in the image data.

Optionally, the method includes training the apparatus using contrastive learning based on a sampling algorithm tailored for keypoint and description extraction to detect automatically visual similarities and differences between images. The sampling algorithm is configured to process a combination of positive and negative versions of the at least one image of the input data that preserves spatial relationships between the images. Positive samples are described as partially overlapping regions from the image and negative samples as non-overlapping regions from one or other images.

The method includes implementing the correspondence network arrangement and the feature description arrangement respectively as an encoder network that is configured to receive the image data and to generate the one or more output feature vectors ***h***, and a projection head network that is configured to receive the one or more output feature vectors ***h*** and to generate therefrom the one or more output vectors ***z*** that are representative of one or more keypoints present in the image data.

The method includes configuring the apparatus to generate a set of the one or more output vectors ***z*** for each image. The apparatus is configured to compute an argument parameter from a multiplication of the sets of the one or more output vectors ***z***. The argument parameter is indicative of whether or not a same given feature is present in the plurality of images.

The method includes configuring the apparatus to compute a given keypoint ***k*** by extracting from the image data a local patch centre at the keypoint ***k*.** The local patch is re-scaled such that a cosine similarity of the one or more output vectors ***z*** of local patches of the plurality of images is used to determine whether or not the local patches represent a same feature for correspondence detection purposes.

Optionally, the method includes configuring the apparatus to compute a given keypoint ***k*** by extracting from the image data a local patch centre at the keypoint ***k*,** wherein the method includes configuring the apparatus to use an additional neural network algorithm that is trained via contrastive learning from a combination of positive and negative versions of the at least one image of the input data that preserves spatial relationships between the images; the additional neural network algorithm is configured to process extracted local patches surrounding the local patch centre at the keypoint ***k*** to learn visual similarities and differences from the input data, and wherein a cosine similarity of the one or more output vectors ***z*** of local patches of the plurality of images from one or more neural networks is used to determine whether or not the local patches represent a same feature for correspondence detection purposes.

According to a third aspect, there is provided a computer program product including a non-transitory computer-readable storage medium having computer-readable instructions stored thereon. The computer-readable instructions is executable by a computerized device comprising processing hardware to execute the method.

A technical problem in the prior art is resolved, where the technical problem is the keypoint and description extraction under adverse conditions such as illumination changes and different viewpoints.

Therefore, in contradistinction to the prior art, the disclosure provides the apparatus and the method for performing automatic keypoint and description extraction, wherein the apparatus provides non-ambiguous and simple local features for non-experts to interpret the keypoint and description. The apparatus captures a large variety of input patterns from natural images and generalizes well to distributions different from a training distribution. The apparatus performs the automatic keypoint and description extraction without any labelled real-time image data. The apparatus is optionally adapted to learn any type of essential visual features and essential semantic information from the image data. The apparatus includes visual embeddings that are used to solve computer vision problems such as place recognition and classification tasks. The apparatus is continuously trained for learning to (i) adapt different data distributions associated with the different environments, and weather conditions, and (ii) become robust to adverse conditions such as illumination changes and different viewpoints. The apparatus is invariant to changes in input space.

These and other aspects of the disclosure will be apparent from and the implementation(s) described below.

### BRIEF DESCRIPTION OF DRAWINGS

Implementations of the disclosure will now be described, by way of example only, with reference to the accompanying drawings, in which:
FIG. 1 is a block diagram of an apparatus for performing automatic keypoint and description extraction in accordance with an implementation of the disclosure;
FIG. 2A is an exemplary block diagram of an apparatus that is trained for performing automatic keypoint and description extraction in accordance with an implementation of the disclosure;
FIG. 2B is an exemplary block diagram of the apparatus that performs keypoint detection using image data in accordance with an implementation of the disclosure;
FIG. 2C is an exemplary block diagram of the apparatus that performs description extraction and correspondence detection using the image data in accordance with an implementation of the disclosure;
FIG. 3 is an exemplary self-driving vehicle with an apparatus for performing automatic keypoint and description extraction in accordance with an implementation of the disclosure;
FIG. 4 is a flow diagram that illustrates a method for using an apparatus for performing automatic keypoint and description extraction from image data that is representative of a plurality of images in accordance with an implementation of the disclosure; and
FIG. 5 is an illustration of an apparatus for use in implementing implementations of the disclosure.

### DETAILED DESCRIPTION OF THE DRAWINGS

Implementations of the disclosure provide an apparatus for performing automatic keypoint and description extraction from image data that represents a plurality of images, where the automatic keypoint and description is adapted for different data distributions and becomes robust to adverse conditions such as illumination changes and different viewpoints. Moreover, implementations of the disclosure provide a method for (namely, a method of) using the apparatus for performing automatic keypoint and description extraction from image data that is representative of the plurality of images. Moreover, the disclosure relates to a self-driving vehicle including the apparatus and a method of operating the self-driving vehicle including the apparatus for enabling the self-driving vehicle to navigate in a spatial region.

To make solutions of the disclosure more comprehensible for a person skilled in the art, the following implementations of the disclosure are described with reference to the accompanying drawings.

Terms such as "a first", "a second", "a third", and "a fourth" (if any) in the summary, claims, and foregoing accompanying drawings of the disclosure are used to distinguish between similar objects and are not necessarily used to describe a specific sequence or order. It should be understood that the terms so used are interchangeable under appropriate circumstances, so that the implementations of the disclosure described herein are, for example, capable of being implemented in sequences other than the sequences illustrated or described herein. Furthermore, the terms "include" and "have" and any variations thereof, are intended to cover a non-exclusive inclusion. For example, a process, a method, an apparatus, a product, or a device that includes a series of steps or units, is not necessarily limited to expressly listed steps or units but may include other steps or units that are not expressly listed or that are inherent to such process, method, product, or device.

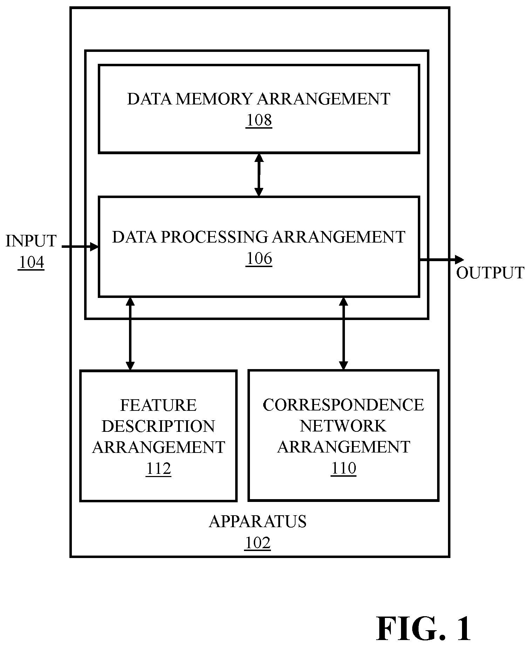

FIG. 1 is an exemplary block diagram of an apparatus **102** for performing automatic keypoint and description extraction in accordance with an implementation of the disclosure. The apparatus **102** includes a data processing arrangement **106** coupled to a data memory arrangement **108,** a correspondence network arrangement **110,** and a feature description arrangement **112.** The apparatus **102** performs the automatic keypoint and description extraction from image data that is representative of a plurality of images. The image data is input **104** to the apparatus **102.** The data processing arrangement **106** is configured to execute one or more neural network algorithms. The correspondence network arrangement **110** is implemented as an algorithm that is executed by the data processing arrangement **106.** The correspondence network arrangement **110** is configured to process the image data to remove regions of the plurality of images that have information content below a given threshold, and to select at least one region in each of the plurality of images that represent a mutually common feature, to generate one or more output feature vectors ***h*.** The one or more output vectors ***h*** is a representative of features present in the image data. The feature description arrangement **112** is implemented as an algorithm that is executed by the data processing arrangement **106.** The feature description arrangement **112** is configured to receive the one or more output vectors ***h*** for the plurality of images. The feature description arrangement **112** is configured to generate one or more output vectors ***z*** that are representative of one or more keypoints present in each of the plurality of images of the image data.

The one or more neural algorithms executed by the data processing arrangement **106** may use a keypoint detection algorithm that utilizes guided back-propagation from output neurons in a neural network to detect the one or more keypoints in the image data by generating output gradient tensors ***g***, and to use hysteresis thresholding applied to the detected one or more keypoints to filter out from the output gradient tensors ***g*** keypoints having a lower relevance.

The apparatus **102,** without limitation, may be selected from a mobile phone, a Personal Digital Assistant (PDA), a tablet, a desktop computer, a server, or a laptop. The guided back-propagation is utilized by the apparatus **102** to detect the one or more keypoints in the image data. The image data may be associated with a single image.

The keypoint detection algorithm may be configured by detecting output values from highest-activated neurons stimulated by the keypoint detection algorithm that describes most informative features present in the image data. The apparatus **102** may detect the one or more keypoints in the image data using guided back-propagating values of the highest-activated neurons that describes the most informative features present in the image data using the keypoint detection algorithm.

The apparatus **102** utilizes post-processing methods such as hysteresis thresholding and non-maximum suppression, to detect the one or more keypoints, to improve robustness, accuracy, reliability, and repeatability measure of the one or more keypoints.

The apparatus **102** is trained using contrastive learning based on a sampling algorithm tailored for keypoint and description extraction to detect automatically visual similarities and differences between images. The sampling algorithm is configured to process a combination of positive and negative versions of the at least one image of the input data that preserves spatial relationships between the images. Positive samples are described as partially overlapping regions from the image and negative samples as non-overlapping regions from one or other images.

The apparatus **102** may include a Siamese Convolutional Network that is trained using contrastive learning to automatically determine the visual similarities and the differences between the plurality of images. The apparatus **102** may include a convolutional neural network that is trained using the contrastive learning to sample the image data.

The sampling algorithm may include one or more data augmentation methods that are applied to the image data including perspective transformation to simulate the plurality of images that are captured in different perspectives. The sampling algorithm enables the apparatus **102** to continuously learn fine-grained visual features.

The apparatus **102** is fully automated for keypoint and description extraction. The apparatus **102** performs the automatic keypoint and description extraction without any labelled real-time image data. The apparatus **102** is adapted to learn any type of essential visual features and essential semantic information from the image data. The apparatus **102** includes visual embeddings that are used to solve computer vision problems such as place recognition and classification tasks. The apparatus **102** is continuously trained for learning to adapt (i) different data distributions associated with different environments and weather, conditions, and (ii) become robust to adverse conditions. The apparatus **102** is invariant to changes in input space.

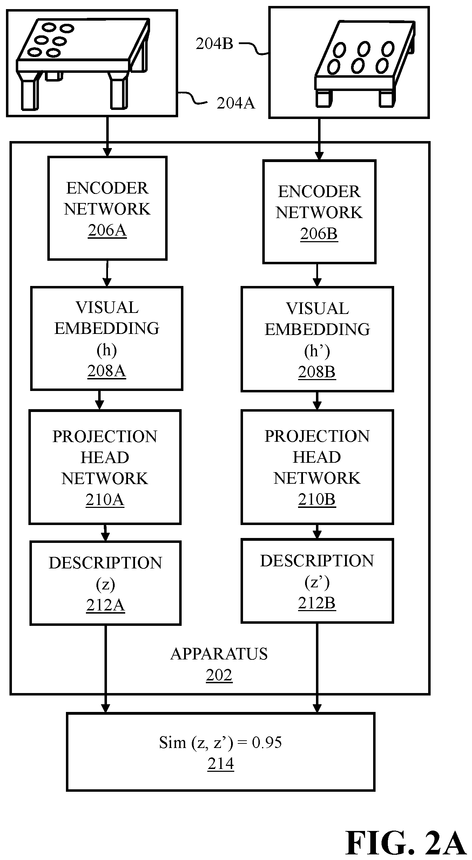

FIG. 2A is an exemplary block diagram that illustrates an apparatus **202** that is trained for performing automatic keypoint and description extraction in accordance with an implementation of the disclosure. The apparatus **202** includes a correspondence network arrangement and a feature description arrangement. The apparatus **202** implements the correspondence network arrangement as encoder networks **206A** and **206B.** The encoder networks **206A** and **206B** are configured to receive image data **204A** and **204B** to generate one or more output feature vectors ***h***. The apparatus **202** implements the feature description arrangement as projection head networks **210A** and **210B** that are configured to receive the one or more output feature vectors ***h*** and to generate therefrom the one or more output vectors ***z*** that are representative of one or more keypoints present in the image data **204A** and **204B.** The image data **204A** and **204B** may be a plurality of images of one or more objects that are captured from different perspectives (e.g. a table with one or more objects that are captured from different perspectives as shown in FIG, 2A). The one or more output feature vectors ***h*** may represent visual embeddings **208A** and **208B** of the pair of image data **204A** and **204B.** The one or more output vectors ***z*** represents extracted descriptions **212A** and **212B** of the image data **204A** and **204B.** The image data **204A** and **204B** are used to compute the one or more output vectors ***z***.

The apparatus **202** is configured to generate a set of the one or more output vectors ***z*** for each image. The apparatus **202** is configured to compute an argument parameter from a multiplication of the sets of the one or more output vectors ***z***. The argument parameter is indicative of whether or not a same given feature is present in the plurality of images.

The apparatus **202** may include a similarity score between the image data **204A** and **204B** that is computed using the one or more output vectors ***z*** and cosine similarities between the image data **204A** and **204B.** If the image data **204A** and **204B** is similar, an output neuron is selected by computing a maximum argument in a multiplication of the one or more output vectors ***z*** from the image data **204A** and **204B.** The similarity score may express as sim (z, z') **214.** The image data **204A** and **204B** are optionally processed by applying guided back-propagation to obtain the one or more output vectors ***z*** that are representative of the one or more keypoints.

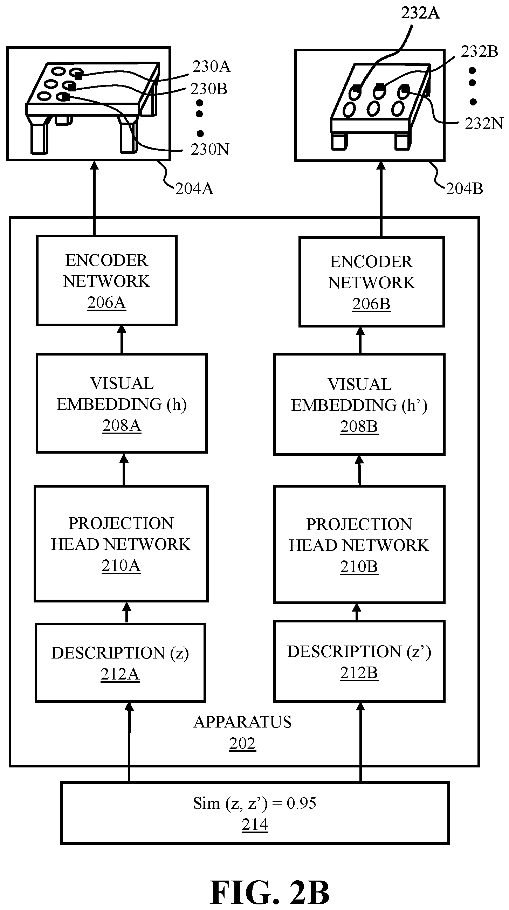

With reference to FIG. 2A, FIG. 2B is an exemplary block diagram of the apparatus **202** that performs keypoint detection using the image data **204A** and **204B** in accordance with an implementation of the disclosure. The apparatus **202** computes, using the encoder networks **206A** and **206B** and the projection head networks **210A** and **210B,** (i) one or more output vectors ***z*** and (ii) a maximum argument in a multiplication of the one or more output vectors ***z***. The one or more output vectors ***z*** is a representative of one or more keypoints **230A-N** and **232A-N** in the plurality of images. The one or more output feature vectors ***h*** may represent the visual embeddings **208A** and **208B** of the image data **204A** and **204B.** The one or more output vectors ***z*** that represents the extracted descriptions **212A** and **212B**.

A high-activation value from the one or more output vectors ***z*** is an indication that a same visual feature is presented in the plurality of images. The guided backpropagation of a selected output vector to an input image generates output gradient tensors ***g*.** The higher the output gradient tensors g is a large influence of the input image to the selected output vector. To improve the likelihood of keypoints **230A-N** or **232A-N** from the image data **204A 204B,** post-processing thresholding methods such as hysteresis thresholding and non-maximum suppression may be applied.

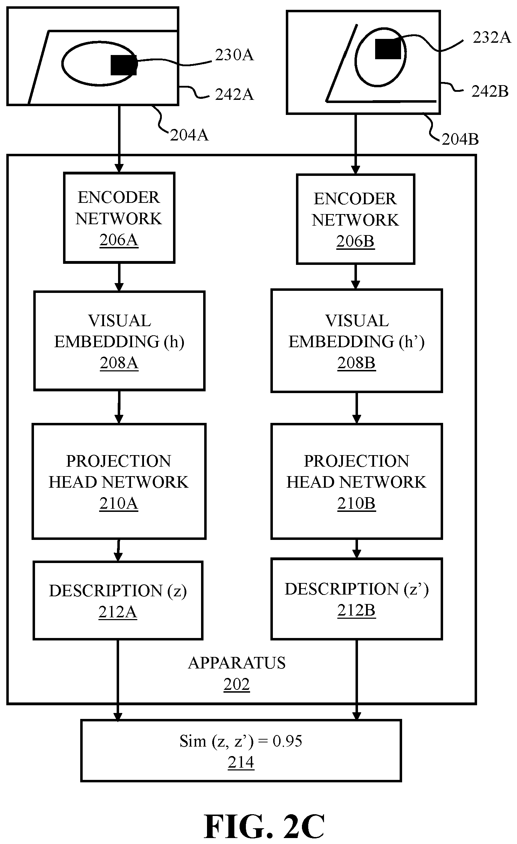

With reference to FIG. 2A and 2B, FIG. 2C is an exemplary block diagram of the apparatus **202** that performs description extraction and correspondence detection using the image data **204A** and **204B** in accordance with an implementation of the disclosure. The apparatus **202** is configured to compute a given keypoint ***k*** by extracting from the image data **204A** and **204B** local patches **242A** and **242B** centre at the keypoint ***k*.** The local patches **242A** and **242B** are re-scaled such that a cosine similarity of the one or more output vectors ***z*** of the local patches **242A** and **242B** of the plurality of images is used to determine whether or not the local patches **242A** and **242B** represent a same feature for correspondence detection purposes. The local patches **242A** and **242B** may include similar keypoints **230A** and **232A.**

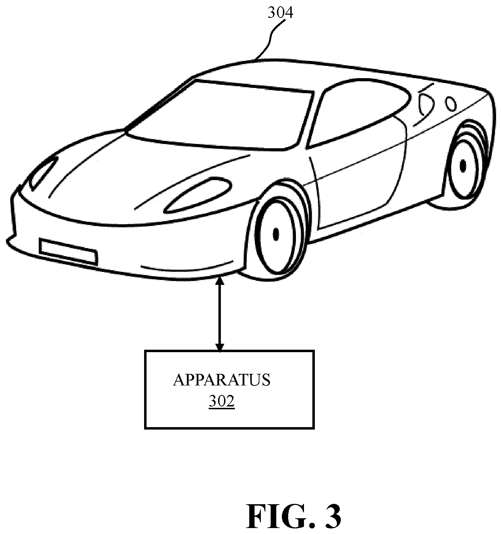

FIG. 3 is an exemplary self-driving vehicle **304** with an apparatus **302** for performing automatic keypoint and description extraction in accordance with an implementation of the disclosure. The self-driving vehicle **304** optionally includes the apparatus **302** that performs automatic keypoint and description extraction from image data that is representative of at least one image of a field of view captured from a spatial region surrounding the self-driving vehicle **304,** for enabling the self-driving vehicle **304** to navigate in the spatial region.

The self-driving vehicle **304** may be a two-wheeler, a four-wheeler, and so forth. The self-driving vehicle **304** is fully automated for keypoint and description extraction using the apparatus **302.** The apparatus **302** enables the self-driving vehicle **304** to continuously train for learning to (i) adapt different data distributions associated with different environments and weather conditions, and (ii) become robust to adverse conditions.

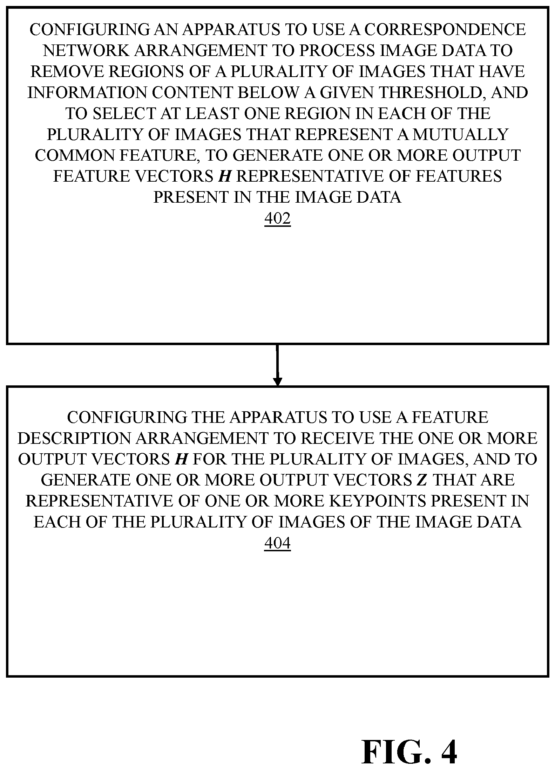

FIG. 4 is a flow diagram that illustrates a method for using an apparatus for performing automatic keypoint and description extraction from image data that is representative of a plurality of images in accordance with an implementation of the disclosure. The image data is input to the apparatus. The apparatus includes a data processing arrangement coupled to a data memory arrangement. The data processing arrangement is configured to execute one or more neural network algorithms. At a step **402,** the apparatus is configured to use a correspondence network arrangement that is implemented as an algorithm that is executed by the data processing arrangement. The correspondence network arrangement is configured to process the image data to remove regions of the plurality of images that have information content below a given threshold, and to select at least one region in each of the plurality of images that represent a mutually common feature, to generate one or more output feature vectors ***h*** representative of features present in the image data. At a step **404,** the apparatus is configured to use a feature description arrangement that is implemented as an algorithm that is executed by the data processing arrangement. The feature description arrangement is configured to receive the one or more output vectors ***h*** for the plurality of images, and to generate one or more output vectors ***z*** that are representative of one or more keypoints present in each of the plurality of images of the image data.

The method may include a Siamese Convolutional Network that is trained using a contrastive learning to automatically identify visual similarities and differences between the plurality of images. The method is fully automated for keypoint and description extraction. The method performs the automatic keypoint and description extraction without any labelled real-time image data. The method enables the apparatus to adapt learning of any type of essential visual features and essential semantic information from the image data. The method may employ visual embeddings that are used to solve computer vision problems such as place recognition and classification tasks. The method enables the apparatus to continuously train for learning to (i) adapt different data distributions associated with different environments and weather conditions, and (ii) become robust to adverse conditions such as illumination changes and different viewpoints. The method is invariant to changes in input space.

In a first implementation form, the method includes arranging for the one or more algorithms to use a keypoint detection algorithm that utilizes guided back-propagation from output neurons in a neural network to detect one or more keypoints in the image data by generating output gradient tensors ***g***, and to use hysteresis thresholding applied to the detected one or more keypoints to filter out from the output gradient tensors ***g*** keypoints having a lower relevance.

In a second implementation form, the method includes configuring the keypoint detection algorithm by detecting output values from highest-activated neurons stimulated by the keypoint detection algorithm that describe most informative features present in the image data.

In a third implementation form, the method includes training the apparatus using contrastive learning based on a sampling algorithm tailored for keypoint and description extraction to detect automatically visual similarities and differences between images. The sampling algorithm is configured to process a combination of positive and negative versions of the at least one image of the input data that preserves spatial relationships between the images. Positive samples are described as partially overlapping regions from the image and negative samples as non-overlapping regions from one or other images.

In a fourth implementation form, the method includes implementing the correspondence network arrangement and the feature description arrangement respectively as an encoder network that is configured to receive the image data and to generate the one or more output feature vectors ***h***, and a projection head network that is configured to receive the one or more output feature vectors ***h*** and to generate therefrom the one or more output vectors ***z*** that are representative of one or more keypoints present in the image data.

In a fifth implementation form, the method includes configuring the apparatus to generate a set of the one or more output vectors ***z*** for each image. The apparatus is configured to compute an argument parameter from a multiplication of the sets of the one or more output vectors ***z***. The argument parameter is an indicative of whether or not a same given feature is present in the plurality of images.

In a sixth implementation form, the method includes configuring the apparatus to compute a given keypoint ***k*** by extracting from the image data a local patch centre at the keypoint ***k*.** The local patch is re-scaled such that a cosine similarity of the one or more output vectors ***z*** of local patches of the plurality of images is used to determine whether or not the local patches represent a same feature for correspondence detection purposes.

The method optionally includes post-processing methods such as hysteresis thresholding and non-maximum suppression, to detect the keypoints, in order to improve robustness, accuracy, reliability and repeatability measure.

A contrastive loss function is used to train the apparatus. The contrastive loss function is defined as:
where the operation sim ${l}_{i , j}^{NT - Xent} = - log \frac{exp \left(sim\left({z}_{i}, {z}_{j}\right)/τ\right)}{{\sum }_{k = 1}^{2 N} {1}_{\left[k\neq i\right]} exp \left(sim\left({z}_{i}, {z}_{k}\right)/τ\right)}$ samples, whereas, on the bottom, the cosine similarity of sim (*z*ᵢ, *z*ⱼ) is computed and aggregated over negative samples in the pair of image data and. The positive samples are transformed versions from overlapped cropped regions from a same image. The negative samples are transformed crops from different images and cropped regions from the same image without overlapping.

In an implementation form, there is provided a method of operating a self-driving vehicle including the apparatus for performing automatic keypoint and description extraction from image data that is representative of at least one image of a field of view captured from a spatial region surrounding the self-driving vehicle, for enabling the self-driving vehicle to navigate in the spatial region.

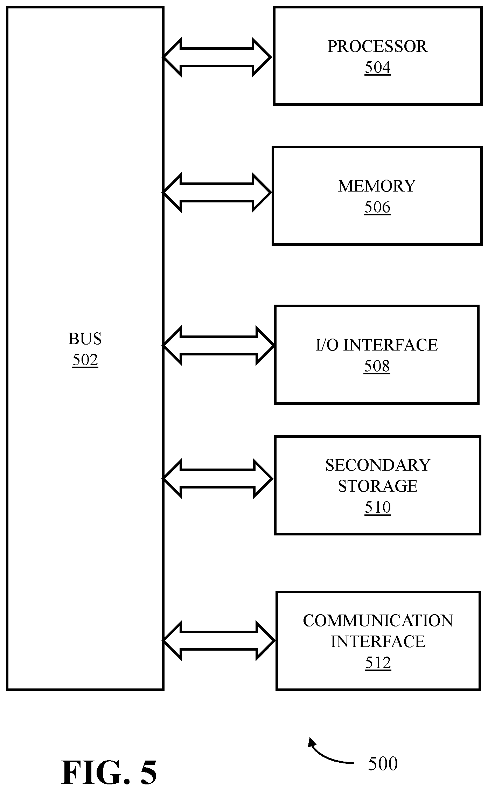

FIG. 5 is an illustration of a computerized device **500** in which the various architectures and functionalities of the various previous implementations may be implemented. As shown, the computerized device **500** includes at least one processor **504** that is connected to a bus **502**, wherein the computerized device **500** may be implemented using any suitable protocol, such as PCI (Peripheral Component Interconnect), PCI-Express, AGP (Accelerated Graphics Port), HyperTransport, or any other bus or point-to-point communication protocol (s). The computerized device **500** also includes a memory **506.**

Control logic (software) and data are stored in the memory **506** which may take a form of random-access memory (RAM). In the disclosure, a single semiconductor platform may refer to a sole unitary semiconductor-based integrated circuit or chip. It should be noted that the term single semiconductor platform may also refer to multi-chip modules with increased connectivity which simulate on-chip modules with increased connectivity which simulate on-chip operation, and make substantial improvements over utilizing a conventional central processing unit (CPU) and bus implementation. Of course, the various modules may also be situated separately or in various combinations of semiconductor platforms per the desires of the user.

The computerized device **500** may also include a secondary storage **510.** The secondary storage **510** includes, for example, a hard disk drive and a removable storage drive, representing a floppy disk drive, a magnetic tape drive, a compact disk drive, digital versatile disk (DVD) drive, recording device, universal serial bus (USB) flash memory. The removable storage drive at least one of reads from and writes to a removable storage unit in a well-known manner.

Computer programs, or computer control logic algorithms, may be stored in at least one of the memory **506** and the secondary storage **510.** Such computer programs, when executed, enable the computerized device **500** to perform various functions as described in the foregoing. The memory **506,** the secondary storage **510,** and any other storage are possible examples of computer-readable media.

In an implementation, the architectures and functionalities depicted in the various previous figures may be implemented in the context of the processor **504,** a graphics processor coupled to a communication interface **512,** an integrated circuit (not shown) that is capable of at least a portion of the capabilities of both the processor **504** and a graphics processor, a chipset (namely, a group of integrated circuits designed to work and sold as a unit for performing related functions, and so forth).

Furthermore, the architectures and functionalities depicted in the various previous-described figures may be implemented in a context of a general computer system, a circuit board system, a game console system dedicated for entertainment purposes, an application-specific system. For example, the computerized device **500** may take the form of a desktop computer, a laptop computer, a server, a workstation, a game console, an embedded system.

Furthermore, the computerized device **500** may take the form of various other devices including, but not limited to a personal digital assistant (PDA) device, a mobile phone device, a smart phone, a television, and so forth. Additionally, although not shown, the computerized device **500** may be coupled to a network (for example, a telecommunications network, a local area network (LAN), a wireless network, a wide area network (WAN) such as the Internet, a peer-to-peer network, a cable network, or the like) for communication purposes through an I/O interface **508.**

It should be understood that the arrangement of components illustrated in the figures described are exemplary and that other arrangements may be possible. It should also be understood that the various system components (and means) defined by the claims, described below, and illustrated in the various block diagrams represent components in some systems configured according to the subject matter disclosed herein. For example, one or more of these system components (and means) may be realized, in whole or in part, by at least some of the components illustrated in the arrangements illustrated in the described figures.

In addition, while at least one of these components are implemented at least partially as an electronic hardware component, and therefore constitutes a machine, the other components may be implemented in software that when included in an execution environment constitutes a machine, hardware, or a combination of software and hardware.

## Claims

1. An apparatus (102, 202, 302) for performing automatic keypoint and description extraction from image data (204A and 204B) that is representative of a plurality of images, wherein the image data (204A and 204B) is input (104) to the apparatus (102, 202, 302), wherein the apparatus (102, 202, 302) includes a data processing arrangement (106) coupled to a data memory arrangement (108), wherein the data processing arrangement (106) is configured to execute one or more neural network algorithms, wherein the apparatus (102, 202, 302) includes:
(i) a correspondence network arrangement (110) that is implemented as an algorithm that is executed by the data processing arrangement (106), wherein the correspondence network arrangement (110) is configured to process the image data (204A and 204B) to remove regions of the plurality of images that have information content below a given threshold, and to select at least one region in each of the plurality of images that represent a mutually common feature, to generate one or more output feature vectors h representative of features present in the image data (204A and 204B); and
(ii) a feature description arrangement (112) that is implemented as an algorithm that is executed by the data processing arrangement (106), wherein the feature description arrangement (112) is configured to receive the one or more output vectors h for the plurality of images, and to generate one or more output vectors ***z*** of local patches, wherein a local patch centre is associated with a keypoint k such that the output vectors ***z*** are representative of one or more keypoints (230A-N, 232A-N) present in each of the plurality of images of the image data (204A and 204B);
wherein the correspondence network arrangement (110) and the feature description arrangement (112) are respectively implemented as an encoder network (206A, 206B) that is configured to receive the image data (204A and 204B) and to generate the one or more output feature vectors ***h***, and a projection head network (210A, 210B) that is configured to receive the one or more output feature vectors h and to generate therefrom the one or more output vectors ***z*** that are representative of one or more keypoints (230A-N, 232A-N) present in the image data (204A and 204B),
wherein the apparatus (102, 202, 302) is configured to generate a set of the one or more output vectors z for each image, wherein the apparatus (102, 202, 302) is configured to compute an argument parameter from a multiplication of the sets of the one or more output vectors ***z***, wherein the argument parameter is indicative of whether or not a same given feature is present in the plurality of images,
**characterized in that**:
wherein the one or more neural algorithms use a keypoint detection algorithm that utilizes guided back-propagation from output neurons in a neural network to detect the one or more keypoints (230A-N, 232A-N) in the image data (204A and 204B) by generating output gradient tensors ***g***, and to use hysteresis thresholding applied to the detected one or more keypoints (230A-N, 232A-N) to filter out from the output gradient tensors g keypoints having a lower relevance,
and wherein the apparatus (102, 202, 302) is configured to compute a given keypoint k by extracting from the image data (204A and 204B) a local patch centre at the keypoint k, wherein the local patch (242A, 242B) is re-scaled such that a cosine similarity of the one or more output vectors ***z*** of local patches (242A, 242B) of the plurality of images is used to determine whether or not the local patches (242A, 242B) represent a same feature for correspondence detection purposes.

2. The apparatus (102, 202, 302) of claim 1, wherein the keypoint detection algorithm is configured by detecting output values from highest-activated neurons stimulated by the keypoint detection algorithm that describes most informative features present in the image data (204A and 204B).

3. The apparatus (102, 202, 302) of claim 1 or 2, wherein the apparatus (102, 202, 302) is trained using contrastive learning based on a sampling algorithm tailored for keypoint and description extraction to detect automatically visual similarities and differences between images, wherein the sampling algorithm is configured to process a combination of positive and negative versions of the at least one image of the input data that preserves spatial relationships between the images, wherein positive samples are described as partially overlapping regions from the image and negative samples as non-overlapping regions from one or other images.

4. The apparatus (102, 202, 302) of any one of claims 1 to 3, wherein the apparatus (102, 202, 302) is configured to compute a given keypoint k by extracting from the image data (204A and 204B) a local patch centre at the keypoint k, wherein the apparatus (102, 202, 302) is configured to use an additional neural network algorithm that is trained via contrastive learning from a combination of positive and negative versions of the at least one image of the input data that preserves spatial relationships between the images, wherein the additional neural network algorithm is configured to process extracted local patches surrounding the local patch centre at the keypoint ***k*** to learn visual similarities and differences from the input data, and wherein a cosine similarity of the one or more output vectors ***z*** of local patches (242A, 242B) of the plurality of images from one or more neural networks is used to determine whether or not the local patches (242A, 242B) represent a same feature for correspondence detection purposes.

5. A method for using an apparatus (102, 202, 302) for performing automatic keypoint and description extraction from image data (204A and 204B) that is representative of a plurality of images, wherein the image data (204A and 204B) is input (104) to the apparatus (102, 202, 302), wherein the apparatus (102, 202, 302) includes a data processing arrangement (106) coupled to a data memory arrangement (108), wherein the data processing arrangement (106) is configured to execute one or more neural network algorithms, wherein the method includes:
(i) configuring the apparatus (102, 202, 302) to use a correspondence network arrangement (110) that is implemented as an algorithm that is executed by the data processing arrangement (106), wherein the correspondence network arrangement (110) is configured to process the image data (204A and 204B) to remove regions of the plurality of images that have information content below a given threshold, and to select at least one region in each of the plurality of images that represent a mutually common feature, to generate one or more output feature vectors ***h*** representative of features present in the image data (204A and 204B); and
(ii) configuring the apparatus (102, 202, 302) to use a feature description arrangement (112) that is implemented as an algorithm that is executed by the data processing arrangement (106), wherein the feature description arrangement (112) is configured to receive the one or more output vectors ***h*** for the plurality of images, and to generate one or more output vectors ***z*** of local patches, wherein a local patch centre is associated with a keypoint ***k*** s (230A-N, 232A-N) present in each of the plurality of images of the image data (204A and 204B);
the method includes implementing the correspondence network arrangement (110) and the feature description arrangement (112) respectively as an encoder network (206A, 206B,) that is configured to receive the image data (204A and 204B) and to generate the one or more output feature vectors ***h*,** and a projection head network (210A, 210B) that is configured to receive the one or more output feature vectors ***h*** and to generate therefrom the one or more output vectors ***z*** that are representative of one or more keypoints (230A-N, 232A-N) present in the image data (204A and 204B),
wherein the method further includes configuring the apparatus to generate a set of the one or more output vectors ***z*** for each image, wherein the apparatus (102, 202, 302) is configured to compute an argument parameter from a multiplication of the sets of the one or more output vectors ***z***, wherein the argument parameter is indicative of whether or not a same given feature is present in the plurality of images,
**characterized in that**:
wherein the method includes arranging for the one or more algorithms to use a keypoint detection algorithm that utilizes guided back-propagation from output neurons in a neural network to detect one or more keypoints (230A-N, 232A-N) in the image data (204A and 204B) by generating output gradient tensors ***g***, and to use hysteresis thresholding applied to the detected one or more keypoints (230A-N, 232A-N) to filter out from the output gradient tensors ***g*** keypoints having a lower relevance
and wherein the method further includes configuring the apparatus to compute a given keypoint ***k*** by extracting from the image data (204A and 204B) a local patch centre at the keypoint ***k*,** wherein the local patch (242A, 242B) is re-scaled such that a cosine similarity of the one or more output vectors ***z*** of local patches (242A, 242B) of the plurality of images is used to determine whether or not the local patches (242A, 242B) represent a same feature for correspondence detection purposes.

6. The method of claim 5, wherein the method includes configuring the keypoint detection algorithm by detecting output values from highest-activated neurons stimulated by the keypoint detection algorithm that describe most informative features present in the image data (204A and 204B).

7. A computer program product including computer-readable instructions, the computer-readable instructions being executable by a computerized device (500) comprising processing hardware to execute the method as claimed in any one of claims 5 or 6.

## Patentansprüche

1. Vorrichtung (102, 202, 302) zur automatischen Extraktion von Schlüsselpunkten und Beschreibungen aus Bilddaten (204A und 204B), die für eine Vielzahl von Bildern repräsentativ sind, wobei die Bilddaten (204A und 204B) in die Vorrichtung (102, 202, 302) eingegeben werden (104), wobei die Vorrichtung (102, 202, 302) eine Datenverarbeitungsanordnung (106) umfasst, die mit einer Datenspeicheranordnung (108) gekoppelt ist, wobei die Datenverarbeitungsanordnung (106) so ausgelegt ist, dass sie einen oder mehrere neuronale Netzwerkalgorithmen ausführt, wobei die Vorrichtung (102, 202, 302) Folgendes umfasst:
(i) eine Korrespondenznetzwerkanordnung (110), die als Algorithmus implementiert ist, der von der Datenverarbeitungsanordnung (106) ausgeführt wird, wobei die Korrespondenznetzwerkanordnung (110) so ausgelegt ist, dass sie die Bilddaten (204A und 204B) verarbeitet, um Bereiche der Vielzahl von Bildern zu entfernen, deren Informationsgehalt unter einem vorgegebenen Schwellenwert liegt, und um in jedem der Vielzahl von Bildern mindestens einen Bereich auszuwählen, der ein gemeinsames Merkmal darstellt, um einen oder mehrere Ausgangsmerkmalsvektoren h zu erzeugen, die in den Bilddaten (204A und 204B) vorhandene Merkmale repräsentieren; und
(ii) eine Merkmalsbeschreibungsanordnung (112), die als Algorithmus implementiert ist, der von der Datenverarbeitungsanordnung (106) ausgeführt wird, wobei die Merkmalsbeschreibungsanordnung (112) so ausgelegt ist, dass sie den einen oder die mehreren Ausgabevektoren h für die Vielzahl von Bildern empfängt, und dazu ausgelegt ist, einen oder mehrere Ausgabevektoren z lokaler Bildausschnitte zu erzeugen, wobei einem Schlüsselpunkt k ein Zentrum des lokalen Bildausschnitts zugeordnet ist, sodass die Ausgabevektoren z für einen oder mehrere Schlüsselpunkte (230A-N, 232A-N) repräsentativ sind, die in jedem der mehreren Bilder der Bilddaten (204A und 204B) vorhanden sind;
wobei die Korrespondenznetzwerkanordnung (110) und die Merkmalsbeschreibungsanordnung (112) jeweils als ein Encodernetzwerk (206A, 206B) implementiert sind, das so ausgelegt ist, dass es die Bilddaten (204A und 204B) empfängt und den einen oder die mehreren Ausgangsmerkmalsvektoren h erzeugt, und als ein Projektionskopfnetzwerk (210A, 210B) implementiert sind, das so ausgelegt ist, dass es den einen oder die mehreren Ausgangsmerkmalsvektoren h empfängt und daraus den einen oder die mehreren Ausgangsvektoren z erzeugt, die für einen oder mehrere in den Bilddaten (204A und 204B) vorhandene Schlüsselpunkte (230A-N, 232A-N) repräsentativ sind,
wobei die Vorrichtung (102, 202, 302) so ausgelegt ist, dass sie für jedes Bild eine Menge aus einem oder mehreren Ausgangsvektoren z erzeugt, wobei die Vorrichtung (102, 202, 302) so ausgelegt ist, dass sie einen Argumentparameter aus einer Multiplikation der Sätze des einen oder der mehreren Ausgangsvektoren z berechnet, wobei der Argumentparameter angibt, ob ein und dasselbe gegebene Merkmal in der Vielzahl von Bildern vorhanden ist oder nicht,
**dadurch gekennzeichnet, dass**:
wobei der eine oder die mehreren neuronalen Algorithmen einen Schlüsselpunkt-Erkennungsalgorithmus verwenden, der eine geführte Rückpropagierung von Ausgangsneuronen in einem neuronalen Netzwerk nutzt, um den einen oder die mehreren Schlüsselpunkte (230A-N, 232A-N) in den Bilddaten (204A und 204B) zu erkennen, indem sie Ausgangsgradiententensoren g erzeugen, und eine auf den einen oder die mehreren erkannten Schlüsselpunkte (230A-N, 232A-N) angewandte Hysterese-Schwellenwertbildung zu verwenden, um aus den Ausgangsgradiententensoren g Schlüsselpunkte mit geringerer Relevanz herauszufiltern,
und wobei die Vorrichtung (102, 202, 302) so ausgelegt ist, dass sie einen gegebenen Schlüsselpunkt k berechnet, indem sie aus den Bilddaten (204A und 204B) ein Zentrum des lokalen Bildausschnitts am Schlüsselpunkt k extrahiert, wobei der lokale Bildausschnitt (242A, 242B) so neu skaliert wird, dass eine Kosinusähnlichkeit des einen oder der mehreren Ausgabevektoren z der lokalen Bildausschnitte (242A, 242B) der mehreren Bilder verwendet wird, um zu bestimmen, ob die lokalen Bildausschnitte (242A, 242B) zum Zweck der Korrespondenzerkennung dasselbe Merkmal darstellen oder nicht.

2. Vorrichtung (102, 202, 302) nach Anspruch 1, wobei der Schlüsselpunkt-Erkennungsalgorithmus so ausgelegt ist, dass er Ausgabewerte der am stärksten aktivierten Neuronen erfasst, die durch den Schlüsselpunkt-Erkennungsalgorithmus stimuliert werden, der die aussagekräftigsten Merkmale beschreibt, die in den Bilddaten (204A und 204B) vorhanden sind.

3. Vorrichtung (102, 202, 302) nach Anspruch 1 oder 2, wobei die Vorrichtung (102, 202, 302) unter Verwendung von kontrastivem Lernen auf der Grundlage eines für die Extraktion von Schlüsselpunkten und Beschreibungen zugeschnittenen Stichprobenalgorithmus trainiert wird, um visuelle Ähnlichkeiten und Unterschiede zwischen Bildern automatisch zu erkennen, wobei der Stichprobenalgorithmus so ausgelegt ist, dass er eine Kombination aus positiven und negativen Versionen des mindestens einen Bildes der Eingabedaten verarbeitet, die räumliche Beziehungen zwischen den Bildern bewahrt, wobei positive Stichproben als sich teilweise überlappende Bereiche aus dem Bild und negative Stichproben als sich nicht überlappende Bereiche aus einem oder anderen Bildern beschrieben werden.

4. Vorrichtung (102, 202, 302) nach einem der Ansprüche 1 bis 3, wobei die Vorrichtung (102, 202, 302) so ausgelegt ist, dass sie einen gegebenen Schlüsselpunkt k berechnet, indem sie aus den Bilddaten (204A und 204B) ein Zentrum des lokalen Bildausschnitts am Schlüsselpunkt k extrahiert, wobei die Vorrichtung (102, 202, 302) so ausgelegt ist, dass sie einen zusätzlichen neuronalen Netzwerkalgorithmus verwendet, der mittels kontrastivem Lernen anhand einer Kombination aus positiven und negativen Versionen des mindestens einen Bildes der Eingabedaten trainiert wird, wobei die räumlichen Beziehungen zwischen den Bildern erhalten bleiben, wobei der zusätzliche neuronale Netzwerkalgorithmus so ausgelegt ist, dass er extrahierte lokale Bildausschnitte, die das Zentrum des lokalen Bildausschnitts am Schlüsselpunkt k umgeben, verarbeitet, um visuelle Ähnlichkeiten und Unterschiede aus den Eingabedaten zu lernen, und wobei eine Kosinusähnlichkeit des einen oder der mehreren Ausgabevektoren z der lokalen Bildausschnitte (242A, 242B) der Vielzahl von Bildern aus einem oder mehreren neuronalen Netzen verwendet wird, um zu bestimmen, ob die lokalen Bildausschnitte (242A, 242B) zum Zweck der Korrespondenzerkennung dasselbe Merkmal darstellen oder nicht.

5. Verfahren zum Betreiben einer Vorrichtung (102, 202, 302) zur Durchführung einer automatischen Extraktion von Schlüsselpunkten und Beschreibungen aus Bilddaten (204A und 204B), die für eine Vielzahl von Bildern repräsentativ sind, wobei die Bilddaten (204A und 204B) in die Vorrichtung (102, 202, 302) eingegeben werden (104), wobei die Vorrichtung (102, 202, 302) eine Datenverarbeitungsanordnung (106) umfasst, die mit einer Datenspeicheranordnung (108) gekoppelt ist, wobei die Datenverarbeitungsanordnung (106) so ausgelegt ist, dass sie einen oder mehrere Algorithmen für neuronale Netze ausführt, wobei das Verfahren Folgendes umfasst:
(i) Konfigurieren der Vorrichtung (102, 202, 302) zur Verwendung einer Korrespondenznetzwerkanordnung (110), die als ein von der Datenverarbeitungsanordnung (106) ausgeführter Algorithmus implementiert ist, wobei die Korrespondenznetzwerkanordnung (110) dazu ausgelegt ist, die Bilddaten (204A und 204B) zu verarbeiten, um Bereiche der Vielzahl von Bildern zu entfernen, deren Informationsgehalt unter einem vorgegebenen Schwellenwert liegt, und um in jedem der Vielzahl von Bildern mindestens einen Bereich auszuwählen, der ein gemeinsames Merkmal darstellt, um einen oder mehrere Ausgangsmerkmalsvektoren h zu erzeugen, die in den Bilddaten (204A und 204B) vorhandene Merkmale repräsentieren; und
(ii) Konfigurieren der Vorrichtung (102, 202, 302) zur Verwendung einer Merkmalsbeschreibungsanordnung (112), die als ein von der Datenverarbeitungsanordnung (106) ausgeführter Algorithmus implementiert ist, wobei die Merkmalsbeschreibungsanordnung (112) so ausgelegt ist, dass sie den einen oder die mehreren Ausgabevektoren h für die Vielzahl von Bildern empfängt, und zur Erzeugung eines oder mehrerer Ausgabevektoren z lokaler Bildausschnitte, wobei einem in jedem der mehreren Bilder der Bilddaten (204A und 204B) vorhandenen Schlüsselpunkt k s (230A-N, 232A-N) ein Zentrum des lokalen Bildausschnitts zugeordnet ist;
wobei das Verfahren die Implementierung der Korrespondenznetzwerkanordnung (110) und der Merkmalsbeschreibungsanordnung (112) jeweils als ein Encodernetzwerk (206A, 206B) umfasst, das so ausgelegt ist, dass es die Bilddaten (204A und 204B) empfängt und den einen oder die mehreren Ausgangsmerkmalsvektoren h erzeugt, sowie als ein Projektionskopfnetzwerk (210A, 210B), das so ausgelegt ist, dass es den einen oder die mehreren Ausgangsmerkmalsvektoren h empfängt und daraus den einen oder die mehreren Ausgangsvektoren z erzeugt, die für einen oder mehrere in den Bilddaten (204A und 204B) vorhandene Schlüsselpunkte (230A-N, 232A-N) repräsentativ sind,
wobei das Verfahren ferner das Konfigurieren der Vorrichtung umfasst, um für jedes Bild einen Satz des einen oder der mehreren Ausgabevektoren z zu erzeugen, wobei die Vorrichtung (102, 202, 302) so ausgelegt ist, dass sie aus einer Multiplikation der Sätze des einen oder der mehreren Ausgabevektoren z einen Argumentparameter berechnet, wobei der Argumentparameter angibt, ob ein bestimmtes Merkmal in der Vielzahl von Bildern vorhanden ist oder nicht,
**dadurch gekennzeichnet, dass**:
wobei das Verfahren umfasst, dass der eine oder die mehreren Algorithmen so eingerichtet werden, dass sie einen Schlüsselpunkt-Erkennungsalgorithmus verwenden, der eine geführte Rückpropagation von Ausgangsneuronen in einem neuronalen Netzwerk nutzt, um einen oder mehrere Schlüsselpunkte (230A-N, 232A-N) in den Bilddaten (204A und 204B) zu erkennen, indem Ausgangsgradiententensoren g erzeugt werden, sowie die Anwendung einer Hysterese-Schwellenwertbildung auf den einen oder die mehreren erkannten Schlüsselpunkte (230A-N, 232A-N), um aus den Ausgangsgradiententensoren g Schlüsselpunkte mit geringerer Relevanz herauszufiltern
und wobei das Verfahren ferner das Konfigurieren der Vorrichtung umfasst, um einen gegebenen Schlüsselpunkt k zu berechnen, indem aus den Bilddaten (204A und 204B) ein Zentrum des lokalen Bildausschnitts am Schlüsselpunkt k extrahiert wird, wobei der lokale Bildausschnitt (242A, 242B) so neu skaliert wird, dass eine Kosinusähnlichkeit des einen oder der mehreren Ausgabevektoren z der lokalen Bildausschnitte (242A, 242B) der mehreren Bilder verwendet wird, um zu bestimmen, ob die lokalen Bildausschnitte (242A, 242B) zum Zweck der Korrespondenzerkennung dasselbe Merkmal darstellen oder nicht.

6. Verfahren nach Anspruch 5, wobei das Verfahren den Schlüsselpunkt-Erkennungsalgorithmus auslegt, indem es Ausgabewerte der am stärksten aktivierten Neuronen erfasst, die durch den Schlüsselpunkt-Erkennungsalgorithmus stimuliert werden und die aussagekräftigsten Merkmale beschreiben, die in den Bilddaten vorhanden sind (204A und 204B).

7. Computerprogrammprodukt, das computerlesbare Anweisungen beinhaltet, wobei die computerlesbaren Anweisungen durch eine computerisierte Vorrichtung (500) ausführbar sind, die Verarbeitungshardware zum Ausführen des Verfahrens nach einem der Ansprüche 5 oder 6 umfasst.

## Revendications

1. Appareil (102, 202, 302) destiné à effectuer une extraction automatique de points clés et de description à partir de données d'image (204A et 204B) représentatives d'une pluralité d'images, les données d'image (204A et 204B) étant fournies en entrée (104) à l'appareil (102, 202, 302), l'appareil (102, 202, 302) comprenant un système de traitement de données (106) couplé à un système de mémoire de données (108), le système de traitement de données (106) étant configuré pour exécuter un ou plusieurs algorithmes, l'appareil (102, 202, 302) comprenant :
(i) un système de réseau de correspondance (110) qui est mis en œuvre sous la forme d'un algorithme qui est exécuté par le système de traitement de données (106), le système de réseau de correspondance (110) étant configuré pour traiter les données d'image (204A et 204B) afin d'éliminer des régions de la pluralité d'images qui ont un contenu d'informations au-dessous d'un seuil donné, et pour sélectionner au moins une région dans chaque image de la pluralité d'images qui représente une caractéristique mutuellement commune, pour générer un ou plusieurs vecteurs de caractéristiques de sortie h représentatifs de caractéristiques présentes dans les données d'image (204A et 204B) ; et
(ii) un système de description de caractéristiques (112) qui est mis en œuvre sous la forme d'un algorithme qui est exécuté par le système de traitement de données (106), le système de description de caractéristiques (112) étant configuré pour recevoir le ou les vecteurs de sortie h pour la pluralité d'images, et pour générer un ou plusieurs vecteurs de sortie z de patchs locaux, un centre de patch local étant associé à un point clé k de sorte que les vecteurs de sortie z soient représentatifs d'un ou plusieurs points clés (230A-N, 232A-N) présents dans chacune de la pluralité d'images des données d'image (204A et 204B) ;
le système de réseau de correspondance (110) et le système de description de caractéristiques (112) étant respectivement mis en œuvre sous la forme d'un réseau codeur (206A, 206B) qui est configuré pour recevoir les données d'image (204A et 204B) et pour générer le ou les vecteurs de caractéristiques de sortie h, et d'un réseau de tête de projection (210A, 210B) qui est configuré pour recevoir le ou les vecteurs de caractéristiques de sortie h et pour générer à partir de ceux-ci le ou les vecteurs de sortie z représentatifs d'un ou plusieurs points clés (230A-N, 232A-N) présents dans les données d'image (204A et 204B),
l'appareil (102, 202, 302) étant configuré pour générer un ensemble du ou des vecteurs de sortie z pour chaque image, l'appareil (102, 202, 302) étant configuré pour calculer un paramètre d'argument à partir d'une multiplication des ensembles du ou des vecteurs de sortie z, le paramètre d'argument étant indicatif de la présence ou non d'une même caractéristique donnée dans la pluralité d'images,
**caractérisé en ce que** :
le ou les algorithmes neuronaux utilisent un algorithme de détection de points clés qui utilise une rétropropagation guidée à partir de neurones de sortie dans un réseau neuronal pour détecter le ou les points clés (230A-N, 232A-N) dans les données d'image (204A et 204B) en générant des tenseurs de gradient de sortie g, et pour utiliser un seuillage d'hystérésis appliqué au ou aux points clés détectés (230A-N, 232A-N) afin d'éliminer par filtrage des tenseurs de gradient de sortie g les points clés ayant une pertinence inférieure,
et l'appareil (102, 202, 302) étant configuré pour calculer un point clé donné k en extrayant à partir des données d'image (204A et 204B) un centre de patch local au niveau du point clé k, le patch local (242A, 242B) étant remis à l'échelle de sorte qu'une similarité cosinus du ou des vecteurs de sortie z de patchs locaux (242A, 242B) de la pluralité d'images est utilisée pour déterminer si les patchs locaux (242A, 242B) représentent ou non une même caractéristique à des fins de détection de correspondance.

2. Appareil (102, 202, 302) selon la revendication 1, dans lequel l'algorithme de détection de points clés est configuré par détection de valeurs de sortie de neurones les plus fortement activés stimulés par l'algorithme de détection de points clés qui décrit les caractéristiques les plus informatives présentes dans les données d'image (204A et 204B).

3. Appareil (102, 202, 302) selon la revendication 1 ou 2, l'appareil (102, 202, 302) étant entraîné en utilisant un apprentissage contrastif basé sur un algorithme d'échantillonnage adapté à l'extraction de points clés et de description pour détecter automatiquement des similarités et des différences visuelles entre images, l'algorithme d'échantillonnage étant configuré pour traiter une combinaison de versions positives et négatives de l'au moins une image des données d'entrée qui préserve les relations spatiales entre les images, les échantillons positifs étant décrits comme étant des régions de l'image se chevauchant partiellement et les échantillons négatifs comme étant des régions d'une ou d'autres images ne se chevauchant pas.

4. Appareil (102, 202, 302) selon l'une quelconque des revendications 1 à 3, l'appareil (102, 202, 302) étant configuré pour calculer un point clé donné k en extrayant à partir des données d'image (204A et 204B) un centre de patch local au niveau du point clé k, l'appareil (102, 202, 302) étant configuré pour utiliser un algorithme de réseau neuronal supplémentaire entraîné par apprentissage contrastif à partir d'une combinaison de versions positives et négatives de l'au moins une image des données d'entrée qui préserve les relations spatiales entre les images, l'algorithme de réseau neuronal supplémentaire étant configuré pour traiter des patchs locaux extraits entourant le centre de patch local au niveau du point clé k pour apprendre des similarités et des différences visuelles à partir des données d'entrée, et une similarité cosinus du ou des vecteurs de sortie z de patchs locaux (242A, 242B) de la pluralité d'images provenant d'un ou plusieurs réseaux neuronaux est utilisée pour déterminer si les patchs locaux (242A, 242B) représentent ou non une même caractéristique à des fins de détection de correspondance.

5. Procédé d'utilisation d'un appareil (102, 202, 302) destiné à effectuer une extraction automatique de points clés et de description à partir de données d'image (204A et 204B) représentatives d'une pluralité d'images, les données d'image (204A et 204B) étant fournies en entrée (104) à l'appareil (102, 202, 302), l'appareil (102, 202, 302) comprenant un système de traitement de données (106) couplé à un système de mémoire de données (108), le système de traitement de données (106) étant configuré pour exécuter un ou plusieurs algorithmes de réseaux neuronaux, le procédé comprenant :
(i) la configuration de l'appareil (102, 202, 302) pour utiliser un système de réseau de correspondance (110) qui est mis en œuvre sous la forme d'un algorithme qui est exécuté par le système de traitement de données (106), le système de réseau de correspondance (110) étant configuré pour traiter les données d'image (204A et 204B) afin d'éliminer des régions de la pluralité d'images qui ont un contenu d'informations au-dessous d'un seuil donné, et pour sélectionner au moins une région dans chaque image de la pluralité d'images qui représente une caractéristique mutuellement commune, pour générer un ou plusieurs vecteurs de caractéristiques de sortie h représentatifs de caractéristiques présentes dans les données d'image (204A et 204B) ; et
(ii) la configuration de l'appareil (102, 202, 302) pour utiliser un système de description de caractéristiques (112) qui est mis en œuvre sous la forme d'un algorithme qui est exécuté par le système de traitement de données (106), le système de description de caractéristiques (112) étant configuré pour recevoir le ou les vecteurs de sortie h pour la pluralité d'images, et pour générer un ou plusieurs vecteurs de sortie z de patchs locaux, un centre de patch local étant associé à un point clé k s (230A-N, 232A-N) présent dans chacune de la pluralité d'images des données d'image (204A et 204B) ;
le procédé comprenant la mise en œuvre du système de réseau de correspondance (110) et du système de description de caractéristiques (112) respectivement sous la forme d'un réseau codeur (206A, 206B) qui est configuré pour recevoir les données d'image (204A et 204B) et pour générer le ou les vecteurs de caractéristiques de sortie h, et d'un réseau de tête de projection (210A, 210B) qui est configuré pour recevoir le ou les vecteurs de caractéristiques de sortie h et pour générer à partir de ceux-ci le ou les vecteurs de sortie z représentatifs d'un ou plusieurs points clés (230A-N, 232A-N) présents dans les données d'image (204A et 204B),
le procédé comprenant en outre la configuration de l'appareil pour générer un ensemble du ou des vecteurs de sortie z pour chaque image, l'appareil (102, 202, 302) étant configuré pour calculer un paramètre d'argument à partir d'une multiplication des ensembles du ou des vecteurs de sortie z, le paramètre d'argument étant indicatif de la présence ou non d'une même caractéristique donnée dans la pluralité d'images,
**caractérisé en ce que** :
le procédé comprend le fait de faire en sorte que le ou les algorithmes utilisent un algorithme de détection de points clés qui utilise une rétropropagation guidée à partir de neurones de sortie dans un réseau neuronal pour détecter un ou plusieurs points clés (230A-N, 232A-N) dans les données d'image (204A et 204B) en générant des tenseurs de gradient de sortie g, et pour utiliser un seuillage d'hystérésis appliqué au ou aux points clés détectés (230A-N, 232A-N) afin d'éliminer par filtrage des tenseurs de gradient de sortie g les points clés ayant une pertinence inférieure
et le procédé comprenant en outre la configuration de l'appareil pour calculer un point clé k donné en extrayant à partir des données d'image (204A et 204B) un centre de patch local au niveau du point clé k, le patch local (242A, 242B) étant remis à l'échelle de sorte qu'une similarité cosinus du ou des vecteurs de sortie z des patchs locaux (242A, 242B) de la pluralité d'images est utilisée pour déterminer si des patchs locaux (242A, 242B) représentent ou non une même caractéristique à des fins de détection de correspondance.

6. Procédé selon la revendication 5, dans lequel le procédé comprend la configuration de l'algorithme de détection de points clés par détection de valeurs de sortie provenant de neurones les plus fortement activés stimulés par l'algorithme de détection de points clés qui décrivent les caractéristiques les plus informatives présentes dans les données d'image (204A et 204B).

7. Produit programme d'ordinateur comprenant des instructions lisibles par ordinateur, les instructions lisibles par ordinateur étant exécutables par un dispositif informatique (500) comprenant un matériel de traitement pour mettre en œuvre le procédé selon l'une quelconque des revendications 5 ou 6.
